# EUROPEAN PATENT APPLICATION

(11) **EP 4 395 393 A1**
(43) Date of publication of application: **03.07.2024**
(21) Application number: 23219609.7
(22) Date of filing: 22.12.2023
(51) Int. Cl.: H04W 12/06, H04W 12/082, H04W 84/12

(54) **REAUTHENTICATION AND REVOCATION IN NON-SEAMLESS WIRELESS LOCAL AREA NETWORK OFFLOAD ACCESS ENVIRONMENT**

(30) Priority: 29.12.2022 IN 202241076801
(71) Applicant: Nokia Technologies Oy, 02610 Espoo (FI)
(72) Inventor: KHARE, Saurabh, Bangalore (IN); MAVUREDDI DHANASEKARAN, Ranganathan, Munich (DE); GUPTA, Pallab, Bangalore (IN)
(74) Representative: Nokia EPO representatives

(57) **Abstract**

Techniques are disclosed for managing reauthentication and revocation in a communication network environment. In one example, a method comprises receiving, at a first network entity (e.g., an NSWOF), a request from a second network entity (e.g., a UDM) of a communication network to which user equipment is subscribed (e.g., HN), wherein the received request is for a reauthentication or a revocation of the user equipment in accordance with wireless local area network access. The first network entity identifies the user equipment based on information about the user equipment (e.g., UE context) previously stored by the first network entity. The first network entity sends at least a portion of the received request toward the user equipment, and then continues to participate in the reauthorization or revocation based on the request.

## Description

### Field

The field relates generally to communication networks, and more particularly, but not exclusively, to security management in such communication networks.

### Background

This section introduces aspects that may be helpful in facilitating a better understanding of the inventions. Accordingly, the statements of this section are to be read in this light and are not to be understood as admissions about what is in the prior art or what is not in the prior art.

Fourth generation (4G) wireless mobile telecommunications technology, also known as Long Term Evolution (LTE) technology, was designed to provide high-capacity mobile multimedia with high data rates particularly for human interaction. Next generation or fifth generation (5G) technology is intended to be used not only for human interaction, but also for machine type communications in so-called Internet of Things (IoT) networks.

While 5G networks are intended to enable massive IoT services (e.g., very large numbers of limited capacity devices) and mission-critical IoT services (e.g., requiring high reliability), improvements over legacy mobile communication services are supported in the form of enhanced mobile broadband (eMBB) services providing improved wireless Internet access for mobile devices.

In an example communication system, user equipment (5G LTE in a 5G network or, more broadly, a UE) such as a mobile terminal (subscriber) communicates over an air interface with a base station or access point of an access network referred to as a 5G AN in a 5G network. The access point (e.g., gNB) is illustratively part of an access network of the communication system. For example, in a 5G network, the access network referred to as a 5G AN is described in 5G Technical Specification (TS) 23.501, entitled "Technical Specification Group Services and System Aspects; System Architecture for the 5G System," and TS 23.502, entitled "Technical Specification Group Services and System Aspects; Procedures for the 5G System (5GS)," the disclosures of which are incorporated by reference herein in their entireties. In general, the access point (e.g., gNB) provides access for the LTE to a core network (CN or 5GC), which then provides access for the UE to other UEs and/or a data network such as a packet data network (e.g., Internet).

TS 23.501 goes on to define a 5G Service-Based Architecture (SBA) which models services as network functions (NFs) that communicate with each other using representational state transfer application programming interfaces (Restful APIs).

Furthermore, 5G Technical Specification (TS) 33.501, entitled "Technical Specification Group Services and System Aspects; Security Architecture and Procedures for the 5G System," the disclosure of which is incorporated by reference herein in its entirety, further describes security management details associated with a 5G network.

Security management is an important consideration in any communication system. However, due to continuing attempts to improve the architectures and protocols associated with a 5G network in order to increase network efficiency and/or subscriber convenience, security management issues associated with user equipment authentication, particularly when access is through a wireless local area network, can present a significant challenge.

### Summary

Illustrative embodiments provide techniques for managing reauthentication and revocation in a communication network environment. For example, one or more illustrative embodiments may be applicable to a non-seamless wireless local area network offload access environment.

In one illustrative embodiment, a method comprises receiving, at a first network entity, a request from a second network entity of a communication network to which user equipment is subscribed, wherein the received request is for one of a reauthentication and a revocation of the user equipment in accordance with wireless local area network access. The first network entity identifies the user equipment based on information about the user equipment previously stored by the first network entity. The first network entity sends at least a portion of the received request toward the user equipment.

In another illustrative embodiment, a method comprises sending, to a first network entity, a request from a second network entity of a communication network to which user equipment is subscribed, wherein the sent request is for one of a reauthentication and a revocation of the user equipment in accordance with wireless local area network access.

In yet another illustrative embodiment, a method comprises receiving, at user equipment from a first network entity, a request from a second network entity of a communication network to which the user equipment is subscribed, wherein the received request is for one of a reauthentication and a revocation of the user equipment in accordance with wireless local area network access. The user equipment then participates in one of the reauthentication and revocation based on the request.

In one non-limiting example, the first network entity may comprise a non-seamless wireless local area network offload function, and the information previously stored by the non-seamless wireless local area network offload function comprises user equipment context previously acquired from a unified data management function (i.e., the second network entity).

Further illustrative embodiments are provided in the form of a non-transitory computerreadable storage medium having embodied therein executable program code that when executed by a processor causes the processor to perform the above steps. Still further illustrative embodiments comprise an apparatus with a processor and a memory configured to perform the above steps.

Advantageously, illustrative embodiments provide techniques for managing reauthentication and revocation in a non-seamless wireless local area network offload access environment.

These and other features and advantages of embodiments described herein will become more apparent from the accompanying drawings and the following detailed description.

### Brief Description of the Drawings

FIG. 1 illustrates a communication system with which one or more illustrative embodiments may be implemented.
FIG. 2 illustrates user equipment and network entities with which one or more illustrative embodiments may be implemented.
FIG. 3 illustrates a procedure for authentication in a non-seamless wireless local area network offload access environment with which one or more illustrative embodiments can be implemented.
FIG. 4 illustrates a procedure for reauthentication, following authentication, in a non-seamless wireless local area network offload access environment according to an illustrative embodiment.
FIG. 5 illustrates a procedure for revocation, following authentication, in a non-seamless wireless local area network offload access environment according to an illustrative embodiment.

### Detailed Description

Embodiments will be illustrated herein in conjunction with example communication systems and associated techniques for security management in communication systems. It should be understood, however, that the scope of the claims is not limited to particular types of communication systems and/or processes disclosed. Embodiments can be implemented in a wide variety of other types of communication systems, using alternative processes and operations. For example, although illustrated in the context of wireless cellular systems utilizing 3GPP system elements such as a 3GPP next generation system (5G), the disclosed embodiments can be adapted in a straightforward manner to a variety of other types of communication systems.

In accordance with illustrative embodiments implemented in a 5G communication system environment, one or more 3GPP technical specifications (TS) and technical reports (TR) may provide further explanation of network elements/functions and/or operations that may interact with parts of the inventive solutions, e.g., the above-referenced 3GPP TS 23.501, 23.502, and TS 33.501. Other 3GPP TS/TR documents may provide other details that one of ordinary skill in the art will realize. For example, TS 22.153 entitled "Technical Specification Group Services and System Aspects; Multimedia Priority Service," TS 23.402 entitled "Technical Specification Group Services and System Aspects; Architecture Enhancements for non-3GPP Accesses," and TR 33.741 entitled "Technical Specification Group Services and System Aspects; Study on Home Network Triggered Primary Authentication (HONTRA)," the disclosures of which are incorporated by reference herein in their entireties, may also be mentioned below in the context of some illustrative embodiments. However, while well-suited for 5G-related 3GPP standards, embodiments are not necessarily intended to be limited to any particular standards.

It is to be understood that the term 5G network, and the like (e.g., 5G system, 5G communication system, 5G environment, 5G communication environment etc.), in some illustrative embodiments, may be understood to comprise all or part of an access network and all or part of a core network. However, the term 5G network, and the like, may also occasionally be used interchangeably herein with the term 5GC network, and the like, without any loss of generality, since one of ordinary skill in the art understands any distinctions.

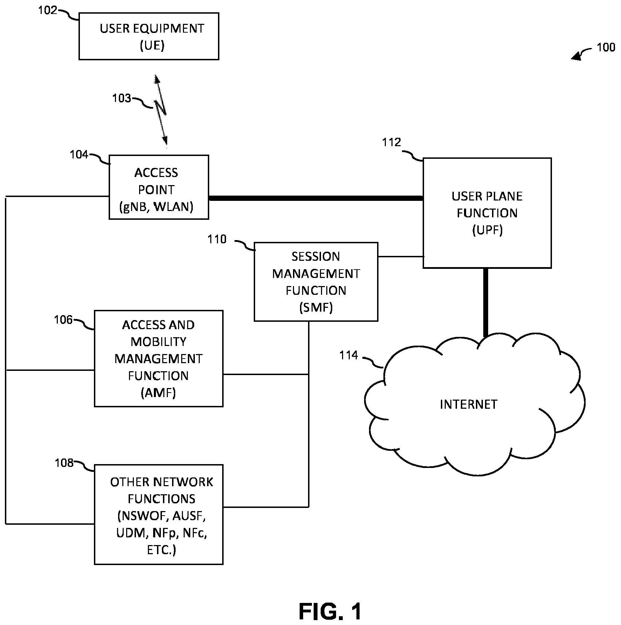

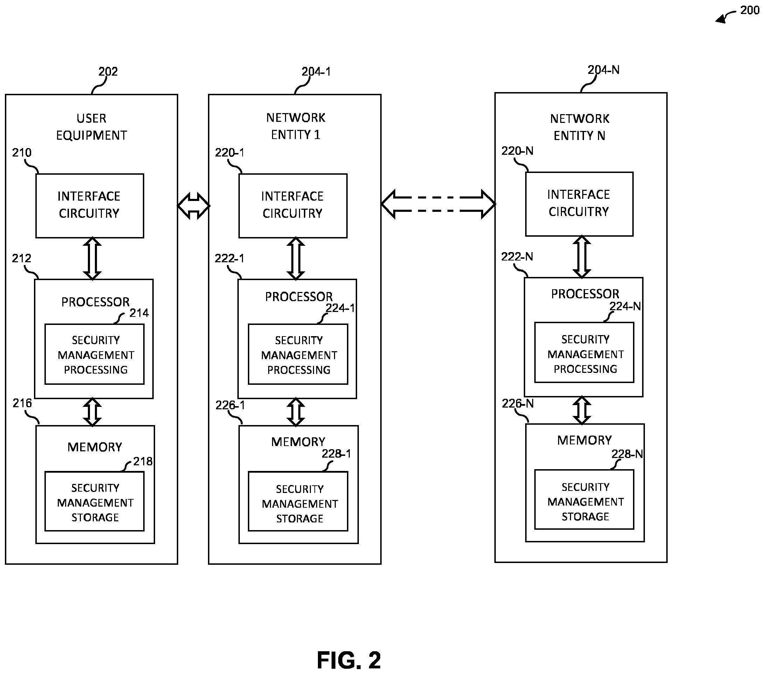

Prior to describing illustrative embodiments, a general description of certain main components of a 5G network will be described below in the context of FIGS. 1 and 2.

FIG. 1 shows a communication system 100 within which illustrative embodiments are implemented. It is to be understood that the elements shown in communication system 100 are intended to represent some main functions provided within the system, e.g., control plane functions, user plane functions, etc. As such, the blocks shown in FIG. 1 reference specific elements in 5G networks that provide some of these main functions. However, other network elements may be used to implement some or all of the main functions represented. Also, it is to be understood that not all functions of a 5G network are depicted in FIG. 1. Rather, at least some functions that facilitate an explanation of illustrative embodiments are represented. Subsequent figures may depict some additional elements/functions (i.e., network entities).

Accordingly, as shown, communication system 100 comprises user equipment (UE) 102 that communicates via an air interface 103 with an access point 104. It is to be understood that LTE 102 may use one or more other types of access points (e.g., access functions, networks, etc.) to communicate with the 5GC network other than a gNB. By way of example only, the access point 104 may be any 5G access network (gNB), an untrusted non-3GPP access network that uses an N3IWF (Non-3GPP Interworking Function), a trusted non-3GPP network that uses a TNGF (Trusted Non-3GPP Gateway Function) or wireline access that uses a W-AGF (Wireline Access Gateway Function) or may correspond to a legacy access point (e.g., eNB). Furthermore, access point 104 may be a wireless local area network (WLAN) access point as will be further explained in illustrative embodiments described herein.

The UE 102 may be a mobile station, and such a mobile station may comprise, by way of example, a mobile telephone, a computer, an IoT device, or any other type of communication device. The term "user equipment" as used herein is therefore intended to be construed broadly, so as to encompass a variety of different types of mobile stations, subscriber stations or, more generally, communication devices, including examples such as a combination of a data card inserted in a laptop or other equipment such as a smart phone. Such communication devices are also intended to encompass devices commonly referred to as access terminals.

In one illustrative embodiment, UE 102 is comprised of a Universal Integrated Circuit Card (UICC) part and a Mobile Equipment (ME) part. The UICC is the user-dependent part of the UE and contains at least one Universal Subscriber Identity Module (USIM) and appropriate application software. The USIM securely stores a permanent subscription identifier and its related key, which are used to uniquely identify and authenticate subscribers to access networks. The ME is the user-independent part of the UE and contains terminal equipment (TE) functions and various mobile termination (MT) functions. Alternative illustrative embodiments may not use UICC-based authentication, e.g., an Non-Public (Private) Network (NPN).

Note that, in one example, the permanent subscription identifier is an International Mobile Subscriber Identity (IMSI) unique to the UE. In one embodiment, the IMSI is a fixed 15-digit length and consists of a 3-digit Mobile Country Code (MCC), a 3-digit Mobile Network Code (MNC), and a 9-digit Mobile Station Identification Number (MSIN). In a 5G communication system, an IMSI is referred to as a Subscription Permanent Identifier (SUPI). In the case of an IMSI as a SUPI, the MSIN provides the subscriber identity. Thus, only the MSIN portion of the IMSI typically needs to be encrypted. The MNC and MCC portions of the IMSI provide routing information, used by the serving network to route to the correct home network. When the MSIN of a SUPI is encrypted, it is referred to as Subscription Concealed Identifier (SUCI). Another example of a SUPI uses a Network Access Identifier (NAI). NAI is typically used for IoT communication.

The access point 104 is illustratively part of an access network of the communication system 100. Such an access network may comprise, for example, a 5G System having a plurality of base stations.

Further, the access point 104 in this illustrative embodiment is operatively coupled to an Access and Mobility Management Function (AMF) 106. In a 5G network, the AMF supports, inter alia, mobility management (MM) and security anchor (SEAF) functions.

AMF 106 in this illustrative embodiment is operatively coupled to (e.g., uses the services of) other network functions 108. As shown, some of these other network functions 108 include, but are not limited to, an Authentication Server Function (AUSF), a Unified Data Management (UDM) function, and a Non-Seamless WLAN Offload Function (NSWOF). NSWOF interfaces to the WLAN access network (e.g., access point 104 is a WLAN access point) using an SWa interface as defined in the above-referenced TS 23.402, as will be further explained in accordance with illustrative embodiments herein. Note that, in a SGC network, the 4G function of the HSS (home subscriber server) is split into the AUSF, UDM, and a Unified Data Repository (UDR, not expressly shown) functions. Typically, AUSF authenticates application servers and provides any needed cryptographic keys, while UDR stores the user data and UDM manages the user data.

Other network functions 108 may include network functions that can act as service producers (NFp) and/or service consumers (NFc). Note that any network function can be a service producer for one service and a service consumer for another service. Further, when the service being provided includes data, the data-providing NFp is referred to as a data producer, while the data-requesting NFc is referred to as a data consumer. A data producer may also be an NF that generates data by modifying or otherwise processing data produced by another NF.

Note that a UE, such as UE 102, is typically subscribed to what is referred to as a Home Public Land Mobile Network (HPLMN) in which some or all of the functions 106 and 108 reside. Alternatively the UE, such as UE 102, may receive services from an NPN where these functions may reside. The HPLMN is also referred to as the Home Environment (HE). If the UE is roaming (not in the HPLMN), it is typically connected with a Visited Public Land Mobile Network (VPLMN) also referred to as a visited network, while the network that is currently serving the UE is also referred to as a serving network. In the roaming case, some of the network functions 106 and 108 can reside in the VPLMN, in which case, functions in the VPLMN communicate with functions in the HPLMN as needed. However, in a non-roaming scenario, mobility management functions 106 and the other network functions 108 reside in the same communication network, i.e. HPLMN. Embodiments described herein, unless otherwise specified, are not necessarily limited by which functions reside in which PLMN (i.e., HPLMN or VPLMN).

The access point 104 is also operatively coupled (via one or more of functions 106 and/or 108) to a Session Management Function (SMF) 110, which is operatively coupled to a User Plane Function (UPF) 112. UPF 112 is operatively coupled to a Packet Data Network, e.g., Internet 114. Note that the thicker solid lines in this figure denote a user plane (UP) of the communication network, as compared to the thinner solid lines that denote a control plane (CP) of the communication network. It is to be appreciated that network (e.g., Internet) 114 in FIG. 1 may additionally or alternatively represent other network infrastructures including, but not limited to, cloud computing infrastructure and/or edge computing infrastructure. Further typical operations and functions of such network elements are not described here since they are not the focus of the illustrative embodiments and may be found in appropriate 3GPP 5G documentation. Note that functions shown in 106, 108, 110 and 112 are examples of network functions (NFs).

It is to be appreciated that this particular arrangement of system elements is an example only, and other types and arrangements of additional or alternative elements can be used to implement a communication system in other embodiments. For example, in other embodiments, the communication system 100 may comprise other elements/functions not expressly shown herein.

Accordingly, the FIG. 1 arrangement is just one example configuration of a wireless cellular system, and numerous alternative configurations of system elements may be used. For example, although only single elements/functions are shown in the FIG. 1 embodiment, this is for simplicity and clarity of description only. A given alternative embodiment may of course include larger numbers of such system elements, as well as additional or alternative elements of a type commonly associated with conventional system implementations.

It is also to be noted that while FIG. 1 illustrates system elements as singular functional blocks, the various subnetworks that make up the 5G network are partitioned into so-called network slices. Network slices (network partitions) are logical networks that provide specific network capabilities and network characteristics that can support a corresponding service type, optionally using network function virtualization (NFV) on a common physical infrastructure. With NFV, network slices are instantiated as needed for a given service, e.g., eMBB service, massive IoT service, and mission-critical IoT service. A network slice or function is thus instantiated when an instance of that network slice or function is created. In some embodiments, this involves installing or otherwise running the network slice or function on one or more host devices of the underlying physical infrastructure. UE 102 is configured to access one or more of these services via access point 104.

FIG. 2 is a block diagram illustrating computing architectures for various participants in methodologies according to illustrative embodiments. More particularly, system 200 is shown comprising user equipment (UE) 202 and a plurality of network entities 204-1, .... , 204-N. For example, in illustrative embodiments and with reference back to FIG. 1, LTE 202 can represent LTE 102, while network entities 204-1, ... , 204-N can represent functions 106 and 108. It is to be appreciated that the UE 202 and network entities 204-1, .... , 204-N are configured to interact to provide security management and other techniques described herein.

The user equipment 202 comprises a processor 212 coupled to a memory 216 and interface circuitry 210. The processor 212 of the user equipment 202 includes a security management processing module 214 that may be implemented at least in part in the form of software executed by the processor. The processing module 214 performs security management described in conjunction with subsequent figures and otherwise herein. The memory 216 of the user equipment 202 includes a security management storage module 218 that stores data generated or otherwise used during security management operations.

Each of the network entities (individually or collectively referred to herein as 204) comprises a processor 222 (222-1, . . . , 222-N) coupled to a memory 226 (226-1, . . . , 226-N) and interface circuitry 220 (220-1, ... , 220-N). Each processor 222 of each network entity 204 includes a security management processing module 224 (224-1, . . . , 224-N) that may be implemented at least in part in the form of software executed by the processor 222. The processing module 224 performs security management operations described in conjunction with subsequent figures and otherwise herein. Each memory 226 of each network entity 204 includes a security management storage module 228 (228-1, ... , 228-N) that stores data generated or otherwise used during security management operations.

The processors 212 and 222 may comprise, for example, microprocessors such as central processing units (CPUs), application-specific integrated circuits (ASICs), digital signal processors (DSPs) or other types of processing devices, as well as portions or combinations of such elements.

The memories 216 and 226 may be used to store one or more software programs that are executed by the respective processors 212 and 222 to implement at least a portion of the functionality described herein. For example, security management operations and other functionality as described in conjunction with subsequent figures and otherwise herein may be implemented in a straightforward manner using software code executed by processors 212 and 222.

A given one of the memories 216 and 226 may therefore be viewed as an example of what is more generally referred to herein as a computer program product or still more generally as a processor-readable storage medium that has executable program code embodied therein. Other examples of processor-readable storage media may include disks or other types of magnetic or optical media, in any combination. Illustrative embodiments can include articles of manufacture comprising such computer program products or other processor-readable storage media.

Further, the memories 216 and 226 may more particularly comprise, for example, electronic random-access memory (RAM) such as static RAM (SRAM), dynamic RAM (DRAM) or other types of volatile or non-volatile electronic memory. The latter may include, for example, non-volatile memories such as flash memory, magnetic RAM (MRAM), phasechange RAM (PC-RAM) or ferroelectric RAM (FRAM). The term "memory" as used herein is intended to be broadly construed, and may additionally or alternatively encompass, for example, a read-only memory (ROM), a disk-based memory, or other type of storage device, as well as portions or combinations of such devices.

The interface circuitries 210 and 220 illustratively comprise transceivers or other communication hardware or firmware that allows the associated system elements to communicate with one another in the manner described herein.

It is apparent from FIG. 2 that user equipment 202 and plurality of network entities 204 are configured for communication with each other as security management participants via their respective interface circuitries 210 and 220. This communication involves each participant sending data to and/or receiving data from one or more of the other participants. The term "data" as used herein is intended to be construed broadly, so as to encompass any type of information that may be sent between participants including, but not limited to, identity data, key pairs, key indicators, tokens, secrets, security management messages, registration request/response messages and data, request/response messages, authentication request/response messages and data, metadata, control data, audio, video, multimedia, consent data, other messages, etc.

It is to be appreciated that the particular arrangement of components shown in FIG. 2 is an example only, and numerous alternative configurations may be used in other embodiments. For example, any given network element/function can be configured to incorporate additional or alternative components and to support other communication protocols.

Other system elements such as access point 104, SMF 110, and UPF 112 may each be configured to include components such as a processor, memory and network interface. These elements need not be implemented on separate stand-alone processing platforms, but could instead, for example, represent different functional portions of a single common processing platform.

More generally, FIG. 2 can be considered to represent processing devices configured to provide respective security management functionalities and operatively coupled to one another in a communication system.

As mentioned above, the 3GPP TS 23.501 defines the SGC network architecture as service-based, e.g., Service-Based Architecture (SBA). It is realized herein that in deploying different NFs, there can be many situations where an NF may need to interact with an entity external to the SBA-based SGC network (e.g., including the corresponding PLMN(s), e.g., HPLMN and VPLMN). Thus, the term "internal" as used herein illustratively refers to operations and/or communications within the SBA-based SGC network (e.g., SBA-based interfaces) and the term "external" illustratively refers to operations and/or communications outside the SBA-based SGC network (non-SBA interfaces).

Given the above general description of some features of a SGC network, problems with existing security approaches in the context of a LTE operating in a non-seamless wireless local area network offload (NSWO) access environment, and solutions proposed in accordance with illustrative embodiments, will now be described herein below.

NSWO is an optional capability of a UE supporting WLAN radio access. A UE supporting NSWO may, while connected to WLAN access point, route specific Internet Protocol (IP) flows via the WLAN access point without traversing the 3GPP core network (e.g., SGC).

5G NSWO uses a form of Extensible Authentication Protocol-Authentication and Key Agreement referred to as EAP-AKA' for authentication, as specified in 3GPP Request For Comment (RFC) 5448, the disclosure of which is incorporated by reference herein in its entirety. The EAP-AKA' implementations comply with the EAP-AKA' profile specified in Annex F of RFC 5448. A new network function, called NSWOF (as generally mentioned above in the context of FIG. 1), is introduced to support authentication for NSWO in SGS. The NSWOF interfaces to the WLAN access network using an SWa interface and interfaces to the AUSF using a service-based interface (SBI).

In general, a UE may connect to a WLAN access network using its 5GS credentials without registration to SGS. This is accomplished by the NSWOF interfacing to the WLAN access network using the SWa interface as defined in the above-referenced TS 23.402, and interfacing to the AUSF using the Nausf service-based interface. The functionality of the NSWOF and the procedures applied for supporting a WLAN connection using 5GS credentials for NSWO are further defined in the above-referenced TS 33.501 Annex S.

The UE can also connect to a WLAN access network using 5GS credentials by performing the 5GS registration via a trusted non-3GPP access procedure defined in the above-referenced TS 23.502. With this procedure, the LTE connects to a WLAN access network using 5GS credentials and simultaneously registers in SGS. However, as mentioned, the architecture also enables a LTE to connect to a WLAN access network using 5GS credentials but without registration in SGS.

If the WLAN is configured as Untrusted Non-3GPP access, in the case that the WLAN supports IEEE 802.1x, the LTE may first use the 5G NSWO procedure to obtain a connection with and the local IP address from the WLAN, and any time after that, the UE may initiate the Untrusted Non-3GPP Access to obtain the access to 5GC.

It is to be appreciated that the above-referenced TS 22.153 has been updated to explicitly cover Multimedia Priority Services (MPS) when access to the EPC/SGC is WLAN (i.e., non-3GPP access). Support of MPS when the LTE has WLAN access is important during certain disaster scenarios such as when 3GPP access networks (LTE and NR) are unavailable or degraded. In at least one proposal, the SGC provides an MPS indication to NSWOF and NSWOF then provides it to the non-3GPP access point (WLAN access point) via the SWa interface. The pre-condition for the above-mentioned proposal is that a SIM-based authentication is performed by the WLAN access using the SWa interface to the NSWOF.

Generally, the NSWOF is stateless, i.e., it does not maintain any UE context after a UE has been authenticated with WLAN access via SWa interface. However, for NSWOF to be able to provide MPS related information for a UE to the WLAN access point during the lifetime when the UE accesses the WLAN, the NSWOF should now become stateful.

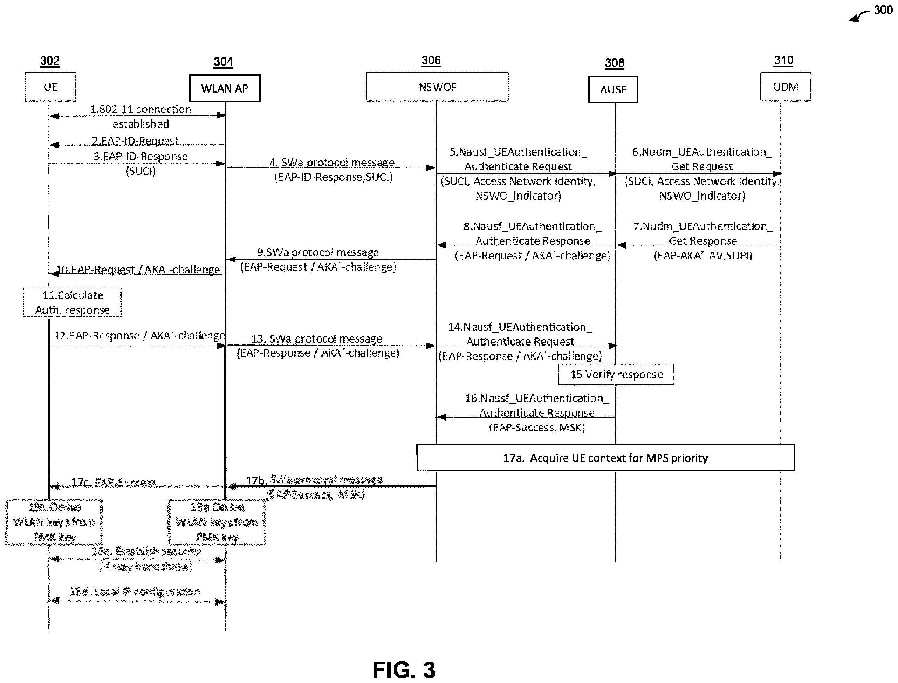

FIG. 3 illustrates a procedure 300 for UE authentication in an NSWOF access environment (i.e., based on authentication procedure for NSWO in 5GS in the above-referenced TS 33.501) with an MPS priority. More particularly, procedure 300 involves a UE 302, a WLAN AP (access point) 304, an NSWOF 306, an AUSF 308, and a UDM 310. The following steps of procedure 300 correspond to the numbers labeled in the figure.

Step 1. A WLAN connection is established between UE 302 and WLAN AP (access point) 304 using procedures specified in IEEE 802.11, the disclosure of which is incorporated by reference herein in its entirety.

Step 2. WLAN AP 304 sends an EAP Identity/Request to LTE 302.

Step 3. LTE 302 sends an EAP Response/Identity message to WLAN AP 304. If LTE 302 determines to use the NSWO service, UE 302 uses its SUCI in a network access identifier (NAI) format (i.e., username@realm format) as its identity.

Step 4. The EAP Response/Identity message is routed over the SWa interface towards NSWOF 306 based on the realm part of the SUCI. NSWOF 306 acts as SBI/AAA proxy between AUSF 308 and WLAN AP 304.

Step 5. NSWOF 306 sends the message Nausf_UEAuthentication_Authenticate Request with SUCI, Access Network Identity and NSWO_indicator towards AUSF 308. NSWO_indicator is used to indicate to AUSF 308 that the authentication request is for NSWO purposes. NSWOF 306 sets the Access Network Identity to "SG:NSWO".

Step 6. Based on the NSWO_indicator, AUSF 308 (acting as the EAP authentication server) sends a Nudm_UEAuthentication_Get Request to UDM 310, including SUCI and the Access Network Identity and NSWO_indicator.

Step 7. Upon reception of the Nudm_UEAuthentication_Get Request, UDM 310 invokes a Subscriber Identity De-concealing Function (SIDF, not expressly shown). SIDF deconceals SUCI to gain SUPI before UDM 310 can process the request. Based on the NSWO_indicator, UDM 310 selects the EAP-AKA' authentication method and generates an authentication vector (AV) using the Access Network Identity as the KDF input parameter. UDM 310 includes the EAP-AKA' authentication vector (RAND, AUTN, XRES, CK' and IK') and may include SUPI to AUSF 308 in a Nudm_UEAuthentication_Get Response message.

Step 8. AUSF 308 stores XRES for future verification. AUSF 308 sends the EAP-Request/AKA'-Challenge message to NSWOF 306 in a Nausf_UEAuthentication_ Authenticate Response message.

Step 9. NSWOF 306 sends the EAP-Request/AKA'-Challenge message to WLAN AP 304 over the SWa interface.

Step 10. WLAN AP 304 forwards the EAP-Request/AKA'-Challenge message to LTE 302.

Step 11. Upon receipt of the RAND and AUTN in the EAP-Request/AKA'-Challenge message, the ME of UE 302 obtains the Access Network Identity from the EAP signalling and the USIM in UE 302 verifies the freshness of the AV' by checking whether AUTN can be accepted. If so, the USIM computes a response RES. The USIM returns RES, CK, IK to the ME. The ME derives CK' and IK' using the Access Network Identity as the KDF input parameter.

Step 12. LTE 302 sends the EAP-Response/AKA'-Challenge message to WLAN AP 304.

Step 13. WLAN AP 304 forwards the EAP-Response/AKA'-Challenge message over the SWa interface to NSWOF 306.

Step 14. NSWOF 306 sends the Nausf_UEAuthentication_Authenticate Request with EAP-Response/AKA'-Challenge message to AUSF 308.

Step 15. AUSF 308 verifies if the received response RES matches the stored and expected response XRES. If AUSF 308 successfully verifies the match, then AUSF 308 continues to step 16, otherwise it returns an error to NSWOF 306. AUSF 308 derives the required Master Session Key (MSK) from CK' and IK' as described in the above-referenced RFC 5448 based on the NSWO_indicator received in step 5.

Step 16. AUSF 308 sends Nausf_UEAuthentication_Authenticate Response message with EAP-Success and MSK to NSWOF 306.

Step 17a. As mentioned above, the NSWOF is typically stateless, i.e., it does not maintain any UE context after UE 302 has been authenticated with WLAN access via SWa interface. However, for NSWOF 306 to be able to provide MPS related information for LTE 302 to WLAN AP 304 during the lifetime when UE 302 accesses the WLAN AP 304, NSWOF 306 needs to be stateful. As such, NSWOF 306 acquires profile information (LTE context) for UE 302 from UDM 310 through an MPS priority selection and subscription procedure in step 17a.

Step17b. NSWOF 306 sends the EAP-success and MSK to WLAN AP 304 over the SWa interface.

Step 17c. The EAP-Success message is forwarded from WLAN AP 304 to LTE 302.

Step 18 (a through d). Upon receiving the EAP-Success message, UE 302 derives the MSK as specified in step 11, if it has not derived the MSK earlier. UE 302 uses the first 256-bit of MSK as Pairwise Master Key (PMK) to perform a 4-way handshake to establish a secure connection with WLAN AP 304 thus enabling routing of specific IP flows between UE 302 and WLAN AP 304 without further traversing the 5GC.

Thus, as explained above in accordance with procedure 300 of FIG. 3, NSWOF 306 is stateful and maintains the context for UE 302 so that network-initiated messages (e.g., MPS indication) can be transferred to WLAN 304/LTE 302. If NSWOF 306 maintains the UE context, then it falls under home network (HN) control for primary authentication defined in the above-referenced TR 33.741, i.e., HN must have a control to initiate reauthentication. Currently, reauthentication and revocation procedures for authenticated NSWO LTEs are not defined.

Illustrative embodiments overcome the above and other technical problems with NSWOF access environments by providing reauthentication and revocation procedures for authenticated NSWO UEs (e.g., UE 302) and the like.

For example, according to one or more illustrative embodiments, a UDM-based HN trigger of NSWO reauthentication is provided, which includes the UDM storing the NSWO authentication status, and the NSWOF storing the NSWO UE context. When the UDM requests reauthentication, the NSWOF fetches the SUCI from the LTE and forwards it to UDM for the EAP-AKA' challenge.

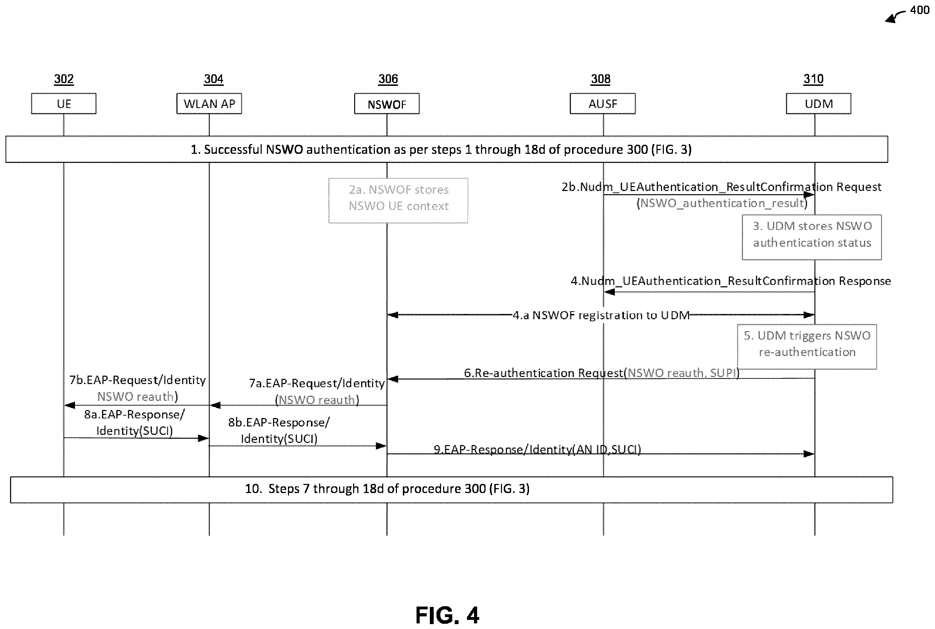

More particularly, FIG. 4 illustrates such a reauthentication procedure, i.e., a procedure 400, according to an illustrative embodiment. For consistency of reference, procedure 400 involves the same entities as FIG. 3, i.e., UE 302, WLAN AP 304, NSWOF 306, AUSF 308, and UDM 310. The following steps of procedure 400 correspond to the numbers labeled in the figure.

Step 1. NSWO authentication as per steps 1 through 18d of procedure 300 in FIG. 3.

Step 2. After a successful NSWO authentication, NSWOF 306 stores the NSWO UE context (step 2a), and AUSF 308 triggers (step 2b) the authentication result confirmation request towards UDM 310 with the NSWO authentication result.

Step 3. UDM 310 stores the NSWO authentication status such as SUPI or GPSI (general public subscription identifier), NSWO authentication result, timestamp, and the Access Network Identity.

Step 4. UDM 310 replies to AUSF 308 with a Nudm_UEAuthentication_ ResultConfirmation Response. In step 4a, NSWOF 306 performs a registration to UDM 310 including informing that UE 302 is available at NSWOF 306.

Step 5. Assume that, at some later time, UDM 310 triggers an NSWO reauthentication procedure with SUPI or GPSI. UDM 310 could trigger this reauthentication due to various reasons such as, but not limited to, an operator policy, a subscription change, etc.

Step 6. UDM 310 sends the reauthentication request with an NSWO reauthentication (reauth) indication and SUPI/GPSI to NSWOF 306.

Step 7. NSWOF 306 can reach UE 302 with information retrieved from the UE context. As such, NSWOF 306 sends EAP-Request/Identity with the NSWO reauth indication to LTE 302 via WLAN AP 304 (steps 7a and 7b).

Step 8. UE 302 responds with EAP-Response/Identity with SUCI (steps 8a and 8b).

Step 9. NSWOF 306 forwards the same message with WLAN access network (AN) ID (AN that WLAN AP 304 is part of) added to it to UDM 310.

Step 10. Steps 7 to 18d of procedure 300 in FIG. 3 are then repeated.

Further, by way of example, according to one or more illustrative embodiments, it is realized that the UE which is NSWO authenticated can be revoked at any time. In general, the NSWOF receives a revocation request from the UDM and forwards it to the UE. Once the revocation is successful, the NSWOF and the UDM delete the LTE-related NSWO information stored from the previous authentication.

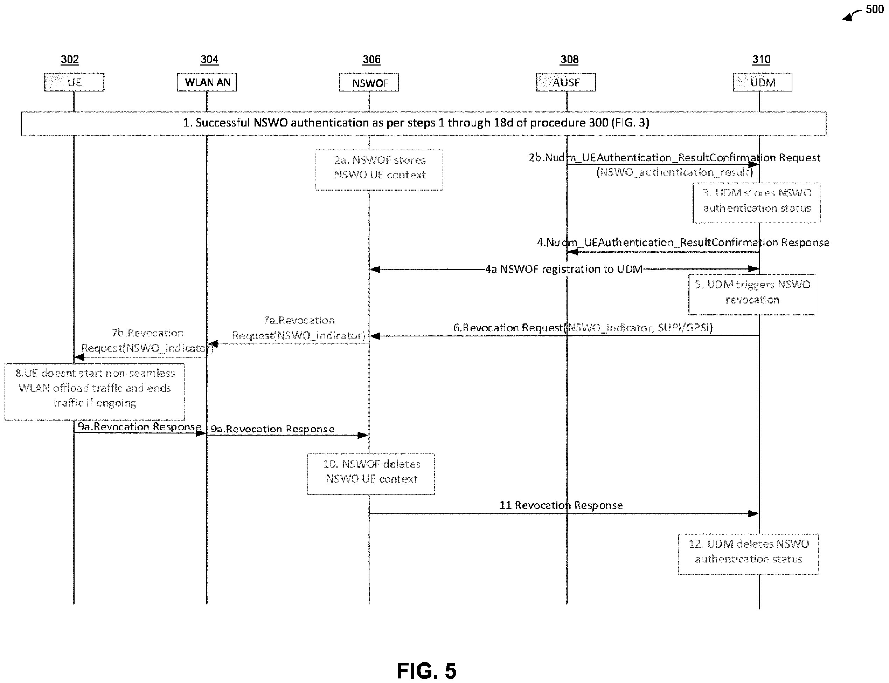

More particularly, FIG. 5 illustrates such a revocation procedure, i.e., a procedure 500, according to an illustrative embodiment. For consistency of reference, procedure 500 involves the same entities as FIG. 3, i.e., UE 302, WLAN AP 304, NSWOF 306, AUSF 308, and UDM 310. The following steps of procedure 500 correspond to the numbers labeled in the figure.

Step 1. NSWO authentication as per steps 1 through 18d of procedure 300 in FIG. 3.

Step 2. After a successful NSWO authentication, NSWOF 306 stores the NSWO UE context (step 2a), and AUSF 308 triggers (step 2b) the authentication result confirmation request towards UDM 310 with the NSWO authentication result.

Step 3. UDM 310 stores the NSWO authentication status such as SUPI or GPSI, NSWO authentication result, timestamp, and the Access Network Identity.

Step 4. UDM 310 replies to AUSF 308 with a Nudm_UEAuthentication_ ResultConfirmation Response. In step 4a, NSWOF 306 performs a registration to UDM 310 including informing that UE 302 is available at NSWOF 306.

Step 5. Assume that, at some later time, UDM 310 triggers an NSWO revocation procedure with SUPI or GPSI.

Step 6. UDM 310 sends the revocation request with NSWO indication and SUPI/GPSI to NSWOF 306.

Step 7. NSWOF 306 sends a diameter message to WLAN AP 304 (step 7a) for revocation. Additionally, WLAN AP 304 informs LTE 302 of the authorization revocation for NSWO (step 7b). WLAN AP 304 can use the IEEE 802.11 procedure to disconnect UE 302.

Step 8. LTE 302 does not start any new session for NSWO traffic. If any session is ongoing, LTE 302 ends the session.

Step 9. UE 302 deletes the keys generated for NSWO and sends a revocation response with status towards NSWOF 306 (steps 9a and 9b). WLAN AP 304 also removes the NSWO related keys used for traffic protection.

Step 10. NSWOF 306 deletes the NSWO UE context.

Step 11. NSWOF 306 sends a revocation response back to UDM 310.

Step 12. UDM 310 as well deletes the NSWO authentication status once the revocation response is received.

As used herein, it is to be understood that the term "communication network" in some embodiments can comprise two or more separate communication networks. Further, the particular processing operations and other system functionality described in conjunction with the diagrams described herein are presented by way of illustrative example only and should not be construed as limiting the scope of the disclosure in any way. Alternative embodiments can use other types of processing operations and messaging protocols. For example, the ordering of the steps may be varied in other embodiments, or certain steps may be performed at least in part concurrently with one another rather than serially. Also, one or more of the steps may be repeated periodically, or multiple instances of the methods can be performed in parallel with one another.

It should again be emphasized that the various embodiments described herein are presented by way of illustrative example only and should not be construed as limiting the scope of the claims. For example, alternative embodiments can utilize different communication system configurations, user equipment configurations, base station configurations, provisioning and usage processes, messaging protocols and message formats than those described above in the context of the illustrative embodiments. These and numerous other alternative embodiments within the scope of the appended claims will be readily apparent to those skilled in the art.

## Claims

1. An apparatus comprising means for:
receiving a request from a network entity of a communication network to which user equipment is subscribed, wherein the received request is for one of a reauthentication and a revocation of the user equipment in accordance with wireless local area network access;
identifying the user equipment based on information about the user equipment previously stored by the apparatus; and
sending at least a portion of the received request toward the user equipment.

2. The apparatus of claim 1, wherein the wireless local area network access comprises non-seamless wireless local area network access via at least one access point.

3. The apparatus of claim 1, further comprising means for:
further participating in one of the reauthentication and the revocation of the user equipment with the network entity.

4. The apparatus of claim 3, wherein further participating in the reauthentication of the user equipment with the network entity further comprises:
receiving a user equipment identifier from the user equipment; and
sending the user equipment identifier to the network entity.

5. The apparatus of claim 4, wherein further participating in the reauthentication of the user equipment with the network entity further comprises:
receiving an identifier of a wireless local area network providing wireless local area network access to the user equipment; and
sending the identifier of the wireless local area network to the network entity.

6. The apparatus of claim 3, wherein further participating in the revocation of the user equipment with the network entity further comprises:
receiving a revocation response from the user equipment; and
sending the revocation response to the network entity.

7. The apparatus of claim 1, comprising a non-seamless wireless local area network offload function.

8. A method comprising:
receiving, at a first network entity, a request from a second network entity of a communication network to which user equipment is subscribed, wherein the received request is for one of a reauthentication and a revocation of the user equipment in accordance with wireless local area network access;
identifying, by the first network entity, the user equipment based on information about the user equipment previously stored by the first network entity; and
sending, from the first network entity, at least a portion of the received request toward the user equipment.

9. An apparatus comprising means for:
sending a request to a network entity of a communication network to which user equipment is subscribed, wherein the sent request is for one of a reauthentication and a revocation of the user equipment in accordance with wireless local area network access.

10. The apparatus of claim 9, wherein the request is triggered by one or more of a subscription change and an operator policy.

11. The apparatus of claim 9, wherein the wireless local area network access comprises non-seamless wireless local area network access via at least one access point.

12. The apparatus of claim 9, further comprising means for:
further participating in one of the reauthentication and the revocation of the user equipment with the network entity.

13. The apparatus of claim 12, wherein further participating in the reauthentication of the user equipment with the network entity further comprises:
receiving an identifier of a wireless local area network providing wireless local area network access to the user equipment from the network entity.

14. The apparatus of claim 12, wherein further participating in the revocation of the user equipment with the network entity further comprises:
receiving a revocation response from the network entity.

15. The apparatus of claim 9, comprising a unified data management function.
